# EUROPÄISCHE PATENTSCHRIFT

(11) **EP 3 191 732 B1**
(45) Veröffentlichungstag und Bekanntmachung des Hinweises auf die Patenterteilung: **02.10.2019**
(21) Anmeldenummer: 15749832.0
(22) Anmeldetag: 14.08.2015
(51) Int. Cl.: F16D 65/18, F16D 65/22

(54) **SPREIZKEILEINHEIT UND BREMSVORRICHTUNG**
WEDGE UNIT AND BRAKE DEVICE
CALE ET DISPOSITIF DE FREIN

(30) Priorität: 11.09.2014 DE 102014218163
(43) Veröffentlichungstag der Anmeldung: 19.07.2017
(73) Patentinhaber: SAF-HOLLAND GmbH, 63856 Bessenbach-Keilberg (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/068728
(87) Internationale Veröffentlichungsnummer: WO 2016/037798

(56) Entgegenhaltungen:
- EP-A1- 0 106 954
- EP-A1- 0 501 079
- BE-A- 646 739
- FR-A1- 2 296 794
- FR-A1- 2 648 531

## Beschreibung

Die Erfindung betrifft eine Spreizkeileinheit für eine Bremsvorrichtung sowie eine Bremsvorrichtung, insbesondere eine Trommelbremse, mit einer Spreizkeileinheit.

Spreizkeileinheiten zur Betätigung von Bremsen, insbesondere Trommelbremsen, sind im Stand der Technik hinlänglich bekannt. Bei einer sogenannten Spreizkeilbremse, oder Spreizkeiltrommelbremse, werden zur Auslösung eines Bremsvorgangs die schwenkbar an einem Bremsträger gelagerten Bremsbelagträger mittels eines Keils, dem Spreizkeil, auseinandergedrückt. Hierdurch legen sich die an den Bremsbelagträgern befestigten Bremsbeläge an die Innenseite der rotierenden Bremstrommel an und bremsen diese. Die Bremsbelagträger weisen an ihrem dem Spreizkeil zugewandten Ende sogenannte Betätigungskolben auf, deren Funktionsflächen durch die Spreizkeileinheit mit einer Druckkraft beaufschlagt werden.

Bei bekannten Spreizeinheiten mit schwimmend gelagerten Keilen kommt es zu einer Verschiebung und damit Schrägstellung des Keils, da sich aufgrund der schwimmenden Lagerung des Keils an den Keilflächen ein Kräftegleichgewicht einstellt, d.h. es werden über den Keil identische Betätigungskräfte auf den auflaufenden und den ablaufenden Bremsbacken übertragen. Mit anderen Worten wird der Keil bei einem axialen Hub zu einer Seite hin gedrückt, was zu der Schrägstellung führt. Die Schrägstellung hat zur Folge, dass eine Winkeldifferenz zwischen den Keilflächen und den Funktionsflächen der Betätigungskolben, die mittels des Keils bewegt werden, entsteht.

Bei bisherigen Bremsvorrichtungen hat diese Winkeldifferenz in der Regel nicht zu Problemen geführt, da zwischen dem Keil und den Betätigungskolben ein Rollenlager vorhanden ist, welches die Winkeldifferenz ausgleicht. Die bekannten Rollenlager umfassen jeweils eine Rolle zwischen einer Keilfläche des Keils und der entsprechend angrenzenden Funktionsfläche des Betätigungskolbens bzw. des Bremsbelagträgers.

Bei höheren Eingangskräften und/oder einer größeren Übersetzung durch eine Reduzierung der Keilwinkel, beispielsweise zur Realisierung eines größeren Bremsmoments, kommt es zu einer höheren Flächenpressung an den Laufbahnen und den Rollen, die die Lebensdauer der Rollen bzw. der Betätigungskolben und/oder des Keils begrenzen können. Außerdem muss damit gerechnet werden, dass sich die Rollen in die Lauffläche des Kolbens eindrücken und dadurch die Bremse blockieren kann.

Die EP 0 501 079 A1 betrifft eine Spreizkeilbetätigungsvorrichtung für die Bremse eines Kraftfahrzeugs, wobei die Vorrichtung in einem Körper einen Käfig aufweist, der wenigstens zwei Walzen aufweist, die parallel so angeordnet sind, dass sie unter der Wirkung eines Keils, der mittels einer mit dem Keil fest verbundenen Schubstange zwischen sie eingeführt ist, abgespreizt werden, dadurch gekennzeichnet, dass sie an der Schubstange einen Schwimmring aufweist, der elastisch bezüglich des Körpers zentriert ist.

Der Erfindung liegt die Aufgabe zugrunde, eine Spreizkeileinheit bzw. eine Betätigungsvorrichtung für eine Bremsvorrichtung, sowie eine entsprechende Bremsvorrichtung, zur Verfügung zu stellen, welche auch für große Bremskräfte ausgelegt werden kann.

Die Aufgabe wird erfindungsgemäß gelöst durch eine Spreizkeileinheit, oder Betätigungsvorrichtung, mit den Merkmalen des Anspruchs 1 sowie eine Bremsvorrichtung mit den Merkmalen des Anspruchs 12. Bevorzugte Ausgestaltungen der Erfindung sind in den abhängigen Ansprüchen angegeben.

Die erfindungsgemäße Spreizkeileinheit für eine Bremsvorrichtung mit Bremsbelagträgern, insbesondere eine Spreizkeilbremse oder Spreizkeiltrommelbremse, umfasst einen entlang einer Betätigungsrichtung, d. h. Axialrichtung bzw. Hubrichtung, verschiebbaren Spreizkeil zum Spreizen der Bremsbelagträger. Die Spreizkeileinheit umfasst des Weiteren ein Stellelement bzw. Hubelement zum Verschieben, insbesondere zur Ausführung einer Hubbewegung, des Spreizkeils. Erfindungsgemäß ist der Spreizkeil verlagerbar oder bewegbar relativ zu dem Stellelement angeordnet.

Die erfindungsgemäße Bremsvorrichtung bzw. Trommelbremse umfasst eine Bremstrommel, mindestens zwei in der Bremstrommel angeordnete Bremsbelagträger zum Tragen von Bremsbelägen und eine Spreizkeileinheit zum Spreizen der Bremsbelagträger. Die Spreizkeileinheit ist in der erfindungsgemäßen Weise ausgebildet.

Ein erster Grundgedanke der Erfindung besteht darin, eine Schrägstellung des schwimmend gelagerten Keils und damit eine relative Winkeländerung der Keilflächen zu den Funktionsflächen der Betätigungskolben, welche mit dem Spreizkeil betätigt werden, weitgehend auszuschließen bzw. zu verhindern. Die Spreizkeileinheit ist hierzu mehrteilig ausgeführt und umfasst einen Spreizkeil sowie ein separates Stellelement bzw. Hubelement bzw. Betätigungselement zur Betätigung des Spreizkeils. Spreizkeil und Stellelement sind nicht starr miteinander verbunden, sondern zueinander beweglich. Durch die Mehrteiligkeit der Spreizkeileinheit und die Bewegbarkeit zwischen Spreizkeil und Stellelement kann eine axiale Verschiebung des Keils (entlang der Betätigungsrichtung) unabhängig von einer seitlichen Verlagerung erfolgen. Diese beiden Bewegungsrichtungen, d. h. Axialrichtung bzw. Betätigungsrichtung einerseits und seitliche Richtung bzw. Querrichtung andererseits, sind also voneinander entkoppelt.

Die Erfindung ermöglicht es, an der Schnittstelle zwischen einem schwimmend gelagerten Spreizkeil und einem Betätigungskolben ein Lager mit einer besonders niedrigen Flächenpressung, beispielsweise ein Nadellager oder ein Mehrrollenlager, d. h. Lager mit mindestens zwei Rollen pro Keilfläche, einzusetzen. Hierdurch lässt sich die Belastung an dieser Schnittstelle auch bei hohen Eingangskräften auf ein akzeptables Niveau reduzieren. Durch die erfindungsgemäße Spreizkeileinheit wird gewährleistet, dass die Funktionsflächen von Keil und Betätigungskolben immer zumindest nahezu parallel bleiben, was den Einsatz der genannten Lager erst ermöglicht.

Ein weiterer Grundgedanke der Erfindung kann darin gesehen werden, eine Spreizkeileinheit bereitzustellen, dessen Spreizkeil bei einer Hubbewegung (axiale Bewegung bzw. Verlagerung entlang der Betätigungsrichtung) unter Beibehaltung seiner Winkelstellung gleichzeitig seitlich bewegbar ist. Die seitliche Bewegung des Spreizkeils kann insbesondere unabhängig von der Bewegung des Stellelements erfolgen. Vorzugsweise ist vorgesehen, dass der Spreizkeil bei einer ausschließlich axialen Bewegung des Stellelements unter Beibehaltung seiner Winkelstellung seitlich bzw. in Querrichtung, also quer zur Hubrichtung bzw. Axialrichtung, bewegbar ist.

Der Spreizkeil ist vorzugsweise entlang einer Querrichtung bzw. einer seitlichen Richtung relativ, insbesondere senkrecht, zur Hubrichtung bzw. Axialrichtung bzw. Betätigungsrichtung bewegbar, insbesondere verschiebbar, am Stellelement gelagert. Die seitliche Verschiebbarkeit des Spreizkeils relativ zu dem Stellelement gewährleistet einerseits eine zuverlässige Hubübertragung von dem Stellelement auf den Spreizkeil und andererseits eine zuverlässige Ausrichtung entlang der Hubrichtung bzw. Axialrichtung. Stellelement und Spreizkeil bleiben also bei einer Hubbewegung vorzugsweise parallel zueinander, insbesondere entlang der Hubrichtung, ausgerichtet. Besonders bevorzugt ist es, dass der Spreizkeil in einer zur Hubrichtung senkrechten Ebene verschiebbar am Stellelement gelagert ist. Hierbei ist es von besonderem Vorteil, wenn der Spreizkeil rotationsfest bzw. nicht schwenkbar an dem Stellelement gelagert ist.

Grundsätzlich ist es auch denkbar, dass der Spreizkeil verschwenkbar an dem Stellelement gelagert ist, so dass eine gegebenenfalls vorliegende Schrägstellung des Stellelements nicht auf den Spreizkeil übertragen wird.

In einer bevorzugten Ausführungsform der Erfindung weist das Stellelement eine Druckfläche auf, welche sich quer, insbesondere senkrecht, zur Betätigungsrichtung erstreckt und entlang welcher der Spreizkeil insbesondere in Querrichtung verschiebbar gelagert ist. Vorzugsweise umfasst das Stellelement einen Druckteller, an welchem die Druckfläche ausgebildet ist. Die Druckfläche ist vorzugsweise eine Axialfläche, welche sich quer, insbesondere senkrecht, zur Betätigungsrichtung bzw. Hubrichtung erstreckt.

In einer weiteren bevorzugten Ausführungsform der Erfindung ist die Druckfläche eine Gleitfläche für den Spreizkeil. Mit anderen Worten ist der Spreizkeil gleitend entlang der Druckfläche gelagert, so dass eine seitliche Verschiebbarkeit des Spreizkeils relativ zur Druckfläche gegeben ist. Die Druckfläche dient dabei zur Übertragung der Betätigungskräfte bzw. Eingangskräfte oder Hubkräfte auf den Spreizkeil.

Es ist des Weiteren bevorzugt, dass das Stellelement eine Kolbenstange aufweist bzw. als Kolbenstange ausgebildet ist. Vorzugsweise weist das einstückige Stellelement eine sich von dem Druckteller erstreckende Kolbenstange auf. Die Kolbenstange weist an ihrem dem Druckteller gegenüberliegenden, distalen Ende vorzugsweise einen Anschlussbereich auf, insbesondere zum Anschließen eines Bremszylinders.

Zum Führen des Spreizkeils entlang des Stellelements ist es bevorzugt, dass an der Schnittstelle zwischen Spreizkeil und Stellelement eine Führungsstruktur, insbesondere ein Führungsprofil vorhanden ist. Die Führungsstruktur bzw. das Führungsprofil führt den Spreizkeil in seitlicher Richtung. Die Führungsstruktur ist vorzugsweise so gestaltet, dass eine ausschließlich seitliche Bewegung des Spreizkeils relativ zu dem Stellelement gewährleistet wird. Unter einer seitlichen Bewegung wird hierbei insbesondere eine Bewegung des Spreizkeils in Richtung seiner gegenüberliegenden Keilflächen verstanden.

In einer besonders bevorzugten Ausführungsform der Erfindung weist das Stellelement oder der Spreizkeil einen Gabelkopf auf, der ausgelegt ist, ein Eingriffselement des entsprechenden anderen Teils (Spreizkeil oder Stellelement) in Querrichtung bzw. seitlicher Richtung verschiebbar zu lagern bzw. führen. Der Gabelkopf kann insbesondere zwei oder mehr Stege umfassen, zwischen denen ein Eingriffselement des entsprechenden anderen Teils (Spreizkeil oder Stellelement) in Querrichtung bzw. seitlicher Richtung verschiebbar geführt ist. Der Gabelkopf kann auch durch eine gezahnte Struktur gebildet sein, beispielsweise an der axialen Stirnseite des Drucktellers und/oder des Spreizkeils.

Des Weiteren ist es bevorzugt, dass eine Führungseinrichtung vorgesehen ist, welche den Spreizkeil relativ zu dem Stellelement entlang der Querrichtung führt. Die Führungseinrichtung kann insbesondere ein Führungselement aufweisen, das den Spreizkeil seitlich entlang des Stellelements führt und/oder eine Bewegung des Spreizkeils in Axialrichtung relativ zum Stellelement verhindert oder begrenzt. Vorzugsweise ist die Führungseinrichtung eingerichtet, eine Bewegung des Spreizkeils ausschließlich in der Querrichtung, also der seitlichen Verschieberichtung, zuzulassen. Alle anderen Bewegungsrichtungen werden vorzugsweise blockiert oder begrenzt. Die Führungseinrichtung kann beispielsweise einen in einem länglichen Spalt geführten Stift aufweisen.

Gemäß einer weiteren bevorzugten Ausführungsform ist zumindest ein Anschlag vorgesehen, welcher die Bewegung, bzw. seitliche Verschiebbarkeit, des Spreizkeils in der Querrichtung begrenzt. Hierdurch kann insbesondere die Montagefreundlichkeit erhöht werden, wobei der Spreizkeil beispielsweise durch den Anschlag unverlierbar an dem Stellelement gelagert sein kann.

Die Zuverlässigkeit des Betriebs kann dadurch verbessert werden, dass eine Axialführung für das Stellelement vorgesehen ist, welche das Stellelement entlang der Betätigungsrichtung führt. Die Axialführung führt das Stellelement dabei insbesondere derart, dass dieses ausschließlich entlang der Betätigungsrichtung bewegbar ist. Die Axialführung verhindert also (im Rahmen vorgegebener Toleranzen) eine Verkippung bzw. Schrägstellung des Stellelements. Da das Stellelement und der Spreizkeil vorzugsweise stets parallel zueinander ausgerichtet sind, würde eine Verkippung des Stellelements sich auf den schwimmend gelagerten Spreizkeil übertragen. Die Axialrichtung ist mit anderen Worten eingerichtet und dimensioniert, um eine im Rahmen der technischen Toleranzen eine ausschließlich axiale Bewegung des Stellelements zu gewährleisten.

In einer weiteren bevorzugten Ausführungsform ist eine Lagereinrichtung zum Lagern des Spreizkeils vorgesehen, welche mindestens zwei Rollen an einer Keilfläche des Spreizkeils aufweist oder als Nadellager ausgebildet ist. Durch die Mehrzahl an Rollen pro Keilfläche des Spreizkeils oder die Ausbildung als Nadellager lässt sich die Flächenpressung verringern und so die Lebensdauer und/oder die Belastbarkeit des Lagers erhöhen.

Insgesamt kann also ein Aspekt der Erfindung darin gesehen werden, dass die Spreizkeileinheit mehrteilig aufgebaut ist und einen Spreizkeil und ein Stellelement aufweist, wobei das Stellelement seitlich verschiebbar relativ zu dem Spreizkeil angeordnet ist. Das Stellelement umfasst vorzugsweise einen Gabelkopf mit einem großflächigen Druckteller und eine Kolbenstange. Das Keilelement ist z. B. über Stifte und längliche Aussparungen seitlich verschiebbar, also schwimmend, im Gabelkopf gelagert, wobei die Zylinderkräfte axial über den großflächigen Druckteller auf das Keilelement und von diesem über Rollen oder ein Nadellager auf die Betätigungskolben übertragen werden. Die seitliche Verschiebbarkeit des Keilelements kann bei Bedarf begrenzt werden, so dass dann eine Kombination aus schwimmendem und starrem Keil entsteht. Die Führung der Druckteller-Kolbenstange ist vorzugsweise ausreichend dimensioniert, um eine ausschließlich axiale Verschiebbarkeit des Drucktellers mit dem Gabelkopf sicherzustellen, da ansonsten eine Winkeldifferenz zwischen den Keilflächen und den Betätigungskolben auftreten könnte.

Die Erfindung wird nachfolgend anhand bevorzugter Ausführungsformen, welche in den beiliegenden, schematischen Figuren dargestellt sind, weiter beschrieben. In der Zeichnung zeigt:
- Fig. 1: eine seitliche Draufsicht auf eine erfindungsgemäße Spreizkeileinheit und
- Fig. 2: eine schematische Ansicht einer erfindungsgemäßen Bremsvorrichtung.

Gleiche oder gleichwirkende Elemente sind in sämtlichen Figuren mit denselben Bezugszeichen gekennzeichnet.

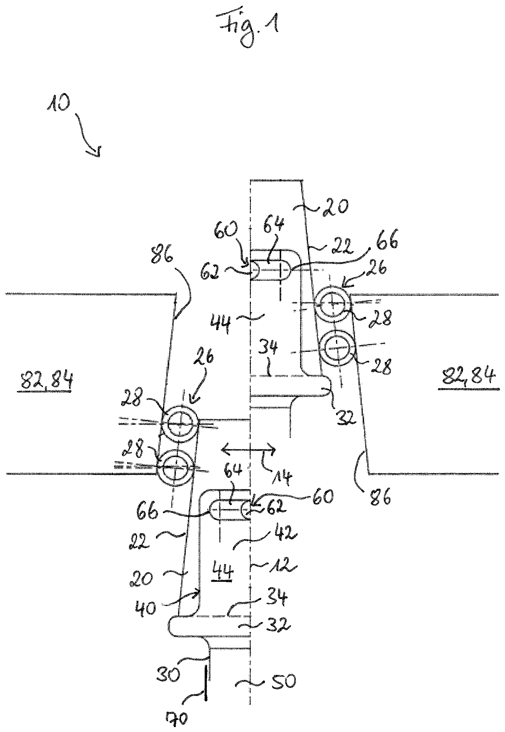

Figur 1 zeigt eine erfindungsgemäße Spreizkeileinheit 10 einer Bremsvorrichtung 100. Die Spreizkeileinheit 10 umfasst einen Spreizkeil 20, dessen Mittenebene (Symmetrieebene) parallel zu einer Betätigungsrichtung 12 (axiale Bewegungsrichtung, Hubrichtung) ausgerichtet ist. Die mehrteilige Spreizkeileinheit 10 umfasst des Weiteren ein Stellelement 30 zum Bewegen des Spreizkeils 20 entlang der Betätigungsrichtung 12. Das Stellelement 30 umfasst einen Druckteller 32, um den Spreizkeil 20 im Wesentlichen entlang der Betätigungsrichtung 12 zu bewegen, so dass die Bremsvorrichtung 100 von einer Freilaufstellung in eine Bremsstellung bringbar ist. Der Druckteller 30 umfasst hierzu eine Druckfläche 34, welche sich im Wesentlichen senkrecht zu der Betätigungsrichtung 12 erstreckt. Die Druckfläche 34 wirkt mit einer entsprechenden, gegenüberliegenden Druckfläche des Spreizkeils 20 zusammen.

Der Spreizkeil 20 weist gegenüberliegende Keilflächen 22 auf, welche über eine Lagereinrichtung 26, insbesondere ein Rollenlager, mit einem Bremsbelagträger 82 bzw. einem Betätigungskolben 84 zur Betätigung eines Bremsbelagträgers 82 gekoppelt sind.

Der Spreizkeil 20 ist entlang einer Querrichtung 14, welche im Wesentlichen senkrecht zur Betägigungsrichtung 12 verläuft, verschiebbar an dem Stellelement 30 gelagert. Die Querrichtung 14 verläuft hierbei insbesondere auf einer Verbindungslinie zwischen den Keilflächen 22 des Spreizkeils 20. Auf diese Weise kann der Spreizkeil bei einer ungleichmäßigen Belastung seiner beiden Keilflächen 22 seitlich ausweichen, während das Stellelement 30 entlang der Betätigungsrichtung 12 geführt ist. Auf diese Weise wird verhindert, dass sich der Spreizkeil 20, zusammen mit dem Stellelement 30, aufgrund der unterschiedlichen Belastung schrägstellt. Die seitliche Verschiebbarkeit des Spreizkeils 20 relativ zu dem Stellelement 30 gewährleistet somit, dass die Keilflächen 22 stets parallel zu den entsprechenden Abrollflächen 86 der Betätigungskolben 84 bzw. Bremsbelagträger 82 ausgerichtet bleiben, selbst wenn sich die Betätigungskolben 84 bzw. Bremsbelagträger 82 auf den beiden Seiten des Spreizkeils 20 unterschiedlich verstellen. Dies ermöglicht den Einsatz eines Lagers mit einer verringerten Flächenpressung, beispielsweise eines Mehrrollenlagers, wie in Figur 1 dargestellt. Die Lagerreinrichtung 26 umfasst hierbei mehrere, beispielsweise zwei Rollen 28 pro Keilfläche 22.

Das Stellelement 30 weist an seinem dem Spreizkeil 20 zugewandten Ende eine Führungskontur 40 auf, um den Spreizkeil 20 entlang der Querrichtung 14 zu führen. Die Führungskontur 40 kann insbesondere derart gestaltet sein, dass sie eine Bewegung des Spreizkeils 20 entlang der Druckfläche 34 in einer zur Querrichtung 40 senkrecht oder quer verlaufenden Richtung unterbindet oder begrenzt. Die Führungskontur 40 kann beispielsweise eine oder mehrere Begrenzungswände 44 aufweisen, welche sich entlang der Querrichtung 14 erstrecken. In der dargestellten Ausführungsform weist das Stellelement 30 an seinem dem Spreizkeil 20 zugewandten Ende einen Gabelkopf 42 auf, welcher den Spreizkeil 20 verschiebbar lagert. Der Gabelkopf 42 umfasst mehrere in Querrichtung 14 verlaufende Begrenzungswände 44, zwischen denen der Spreizkeil 20 gelagert ist. Die Begrenzungswände 44 erstrecken sich ausgehend von dem Druckteller 32 und bilden zusammen mit dem Druckteller 32 eine schlitzförmige Ausnehmung für den Spreizkeil 20.

Unterhalb des Drucktellers 32 ist eine Kolbenstange 50 angeordnet, die mit einem Betätigungselement, insbesondere einer Kolbenstange, eines Hubzylinders koppelbar ist.

Um ein Lösen des Spreizkeils 20 von dem Stellelement 30 zu verhindern, ist eine Führungseinrichtung 60 vorgesehen, die ausschließlich eine Bewegung des Spreizkeils 20 entlang der Querrichtung 14 zulässt. Die Führungseinrichtung 60 umfasst in der dargestellten Ausführungsform einen an dem Spreizkeil 20 montierten Stift 62, der in einer Aussparung 64 des Gabelkopfes 42 geführt ist. Grundsätzlich ist aber auch die umgekehrte Anordnung möglich, d.h. der Stift kann an dem Gabelkopf 42 bzw. dem Stellelement 30 angeordnet sein und die längliche Aussparung an dem Spreizkeil 20. Die längliche Aussparung 64 verläuft dabei entlang der Querrichtung 14. Endbereiche der Aussparung 64 bilden jeweils einen Anschlag 66, welcher die Bewegung des Spreizkeils 20 in der Querrichtung 14 begrenzt.

Zur Sicherstellung einer ausschließlich axialen Bewegung des Stellelements 30 ist eine Axialführung 70 für das Stellelement 30 vorgesehen. Diese ist so dimensioniert und ausgeführt, dass eine Schrägstellung des Stellelements 30 zumindest weitgehend verhindert wird.

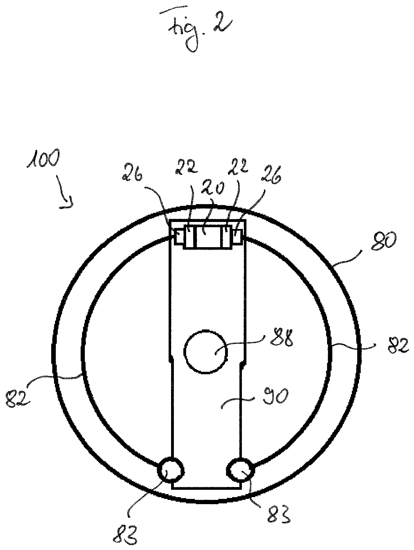

Figur 2 zeigt in stark abstrahierter Form eine Bremsvorrichtung bzw. Trommelbremse 100 mit einer Spreizkeileinheit 10. Die Bremsvorrichtung 100 umfasst eine Bremstrommel 80, in dessen Innenraum Bremsbelagträger 82 an einem Bremsträger 90 über Gelenke 83 schwenkbar gelagert sind. Der Bremsträger 90 ist an einem Achselement 88 befestigt. Die Bremsbelagträger 82 werden über eine erfindungsgemäße Spreizkeileinheit 10 auseinandergedrückt, so dass an den Bremsbelagträgern 82 montierte Bremsbeläge gegen die Innenseite der Bremstrommel 80 gedrückt werden.

### Bezugszeichen:

- 10: Spreizkeileinheit
- 12: Betätigungsrichtung
- 14: Querrichtung
- 20: Spreizkeil
- 22: Keilfläche
- 26: Lagereinrichtung
- 28: Rolle
- 30: Stellelement
- 32: Druckteller
- 34: Druckfläche
- 40: Führungskontur
- 42: Gabelkopf
- 44: Begrenzungswand
- 50: Kolbenstange
- 60: Führungseinrichtung
- 62: Stift
- 64: Aussparung
- 66: Anschlag
- 70: Axialführung
- 80: Bremstrommel
- 82: Bremsbelagträger
- 83: Gelenk
- 84: Betätigungskolben
- 86: Abrollfläche
- 88: Achselement
- 90: Bremsträger
- 100: Bremsvorrichtung

## Patentansprüche

1. Spreizkeileinheit für eine Bremsvorrichtung (100) mit Bremsbelagträgern (82), aufweisend
einen entlang einer Betätigungsrichtung (12) verschiebbaren Spreizkeil (20) zum Spreizen der Bremsbelagträger (82),
wobei ein Stellelement (30) zum Verschieben des Spreizkeils (20) vorgesehen ist, und
wobei der Spreizkeil (20) verlagerbar relativ zu dem Stellelement (30) angeordnet ist.

2. Spreizkeileinheit nach Anspruch 1,
wobei der Spreizkeil (20) entlang einer Querrichtung (14) relativ zur Betätigungsrichtung (12) bewegbar, insbesondere verschiebbar, am Stellelement (30) gelagert ist.

3. Spreizkeileinheit nach Anspruch 1,
wobei der Spreizkeil (20) verschwenkbar an dem Stellelement (30) gelagert ist

4. Spreizkeileinheit nach einem der vorhergehenden Ansprüche,
wobei das Stellelement (30) eine Druckfläche (34) aufweist, welche sich quer zur Betätigungsrichtung (12) erstreckt und entlang welcher der Spreizkeil (20) verschiebbar gelagert ist.

5. Spreizkeileinheit nach Anspruch 4,
wobei die Druckfläche (34) eine Gleitfläche für den Spreizkeil (20) ist.

6. Spreizkeileinheit nach einem der vorhergehenden Ansprüche,
wobei das Stellelement (30) eine Kolbenstange (50) aufweist.

7. Spreizkeileinheit nach einem der vorhergehenden Ansprüche,
wobei das Stellelement (30) und/oder der Spreizkeil (20) einen Gabelkopf (42) aufweist.

8. Spreizkeileinheit nach einem der vorhergehenden Ansprüche,
wobei eine Führungseinrichtung (60) vorgesehen ist, welche den Spreizkeil (20) relativ zu dem Stellelement (30) entlang einer Querrichtung (14) führt.

9. Spreizkeileinheit nach einem der vorhergehenden Ansprüche,
wobei zumindest ein Anschlag (66) vorgesehen ist, welcher die Bewegung des Spreizkeils (20) in einer Querrichtung (14) begrenzt.

10. Spreizkeileinheit nach einem der vorhergehenden Ansprüche,
wobei eine Axialführung (70) für das Stellelement (30) vorgesehen ist, welche das Stellelement (30) entlang der Betätigungsrichtung (12) führt.

11. Spreizkeileinheit nach einem der vorhergehenden Ansprüche,
wobei eine Lagereinrichtung (26) zum Lagern des Spreizkeils (20) vorgesehen ist, welche mindestens zwei Rollen (28) an einer Keilfläche (22) des Spreizkeils (20) aufweist oder als Nadellager ausgebildet ist.

12. Trommelbremse, aufweisend
eine Bremstrommel (80),
mindestens zwei in der Bremstrommel (80) angeordnete Bremsbelagträger (82) zum Tragen von Bremsbelägen und
eine Spreizkeileinheit (10) zum Spreizen der Bremsbelagträger (82), wobei die Spreizkeileinheit (10) einen entlang einer Betätigungsrichtung (12) verschiebbaren Spreizkeil (20) zum Spreizen der Bremsbelagträger (82) aufweist,
wobei ein Stellelement (30) zum Verschieben des Spreizkeils (20) vorgesehen ist, und
wobei der Spreizkeil (20) verlagerbar relativ zu dem Stellelement (30) angeordnet ist.

## Claims

1. A wedge unit for a braking device (100) with brake lining carriers (82), having
a wedge (20) which can be displaced in an actuation direction (12) for spreading the brake lining carriers (82),
wherein an adjusting element (30) is provided for displacing the wedge (20), and
wherein the wedge (20) is arranged displaceably relative to the adjusting element (30).

2. The wedge unit as claimed in claim 1, wherein the wedge (20) is mounted on the adjusting element (30) moveably, in particular displaceably, in the transverse direction (14) relative to the actuation direction (12).

3. The wedge unit as claimed in claim 1, wherein the wedge (20) is mounted pivotably on the adjusting element (30).

4. The wedge unit as claimed in any of the preceding claims, wherein the adjusting element (30) has a pressure face (34) which extends transversely to the actuation direction (12) and along which the wedge (20) is mounted displaceably.

5. The wedge unit as claimed in claim 4, wherein the pressure face (34) is a slip face for the wedge (20).

6. The wedge unit as claimed in any of the preceding claims, wherein the adjusting element (30) has a piston rod (50).

7. The wedge unit as claimed in any of the preceding claims, wherein the adjusting element (30) and/or the wedge (20) has a fork head (42).

8. The wedge unit as claimed in any of the preceding claims, wherein a guide device (60) is provided which guides the wedge (20) in the transverse direction (14) relative to the adjusting element (30).

9. The wedge unit as claimed in any of the preceding claims, wherein at least one stop (66) is provided which limits the movement of the wedge (20) in a transverse direction (14).

10. The wedge unit as claimed in any of the preceding claims, wherein an axial guide (70) is provided for the adjusting element (30) which guides the adjusting element (30) in the actuation direction (12).

11. The wedge unit as claimed in any of the preceding claims, wherein a bearing device (26) is provided for supporting the wedge (20), which has at least two rollers (28) on a wedge face (22) of the wedge (20), or is configured as a needle bearing.

12. A drum brake having
a brake drum (80),
at least two brake lining carriers (82) arranged in the brake drum (80) for carrying brake linings, and
a wedge unit (10) for spreading the brake lining carriers (82), wherein the wedge unit (10) has a wedge (20) which can be displaced in an actuation direction (12) for spreading the brake lining carriers (82),
wherein an adjusting element (30) is provided for displacing the wedge (20), and
wherein the wedge (20) is arranged displaceably relative to the adjusting element (30).

## Revendications

1. Unité de cale d'écartement pour un dispositif de freinage (100) avec supports de garniture de frein (82), comprenant
une cale d'écartement (20) déplaçable le long d'une direction d'actionnement (12) pour écarter les supports de garniture de frein (82),
dans laquelle un élément de réglage (30) est prévu pour déplacer la cale d'écartement (20), et
dans laquelle la cale d'écartement (20) est agencée de manière déplaçable par rapport à l'élément de réglage (30).

2. Unité de cale d'écartement selon la revendication 1,
la cale d'écartement (20) étant montée mobile sur l'élément de réglage (30), en particulier en translation le long d'une direction transversale (14) par rapport à la direction d'actionnement (12).

3. Unité de cale d'écartement selon la revendication 1,
la cale d'écartement (20) étant montée de manière pivotante sur l'élément de réglage (30)

4. Unité de cale d'écartement selon l'une des revendications précédentes, dans laquelle l'élément de réglage (30) présente une surface de pression (34) qui s'étend transversalement à la direction d'actionnement (12) et le long de laquelle la cale d'écartement (20) est montée en translation.

5. Unité de cale d'écartement selon la revendication 4,
dans laquelle la surface de pression (34) est une surface de coulissement pour la cale d'écartement (20).

6. Unité de cale d'écartement selon l'une des revendications précédentes, dans laquelle l'élément de réglage (30) comprend une tige de piston (50).

7. Unité de coin d'écartement selon l'une des revendications précédentes, dans laquelle l'élément de réglage (30) et/ou la cale d'écartement (20) comprend une tête en forme de fourche (42).

8. Unité de cale d'écartement selon l'une des revendications précédentes, dans laquelle il est prévu un dispositif de guidage (60) qui guide la cale d'écartement (20) par rapport à l'élément de réglage (30) le long d'une direction transversale (14).

9. Unité de cale d'écartement selon l'une des revendications précédentes, dans laquelle il est prévu au moins une butée (66) qui limite le mouvement de la cale d'écartement (20) dans une direction transversale (14).

10. Unité de cale d'écartement selon l'une des revendications précédentes, dans laquelle un guidage axial (70) est prévu pour l'élément de réglage (30) qui guide l'élément de réglage (30) le long de la direction d'actionnement (12).

11. Unité de cale d'écartement selon l'une des revendications précédentes, dans laquelle un dispositif de palier (26) est prévu pour supporter la cale d'écartement (20), lequel présente au moins deux galets (28) sur une surface en coin (22) de la cale d'écartement (20) ou est réalisé sous forme de roulement à aiguilles.

12. Frein à tambour, comprenant un tambour de frein (80), au moins deux supports de garniture de frein (82) agencés dans le tambour de frein (80) pour porter des garnitures de frein et une unité de cale d'écartement (10) pour écarter les supports de garniture de frein (82),
dans lequel l'unité de cale d'écartement (10) comportant un cale d'écartement (20) qui peut être déplacée le long d'une direction d'actionnement (12) pour écarter les supports de garniture de frein (82),
dans lequel un élément de réglage (30) est prévu pour déplacer la cale d'écartement (20) en translation, et
dans lequel la cale d'écartement (20) est agencée déplaçable par rapport à l'élément de réglage (30).
